# EUROPEAN PATENT APPLICATION

(11) **EP 3 967 795 A1**
(43) Date of publication of application: **16.03.2022**
(21) Application number: 21175961.8
(22) Date of filing: 26.05.2021
(51) Int. Cl.: D01F 1/10, C23F 11/02, B32B 27/12

(54) **A PROTECTIVE TEXTILE STRUCTURE**

(30) Priority: 15.09.2020 TR 202014638
(71) Applicant: Sun Tekstil Sanayi ve Ticaret Anonim Sirketi, Izmir (TR)
(72) Inventor: KEMANECI , Sinem, Izmir (TR); GÖRELI, AHMET GÖKHAN, Izmir (TR); BOYACI, BEKIR, Izmir (TR)
(74) Representative: Yamankaradeniz, Kemal

(57) **Abstract**

Invention relates to a protective textile embodiment (K) for use to prevent corrosion and deterioration of iron, steel and similar metal containing materials by environmental conditions such as sea water, fresh water, humidity, dust, sand, extreme wind, UV lights, too low/ high temperatures, immediate temperature changes etc.

## Description

### Technical Field

Invention relates to a protective textile embodiment for use to prevent corrosion and deterioration of iron, steel and similar metal content materials and properties due to exposure to environmental conditions and a method for production of said protective textile embodiment.

Invention particularly relates to a protective textile embodiment for use to prevent corrosion and deterioration of iron, steel and similar metal content materials by environmental conditions such as sea water, fresh water, humidity, dust, sand, extreme wind, UV lights, too low/ high temperatures, immediate temperature changes etc. and a method for production of said protective textile embodiment.

### State of the Art

In general, deformation caused onto parts having metal content, vehicles, aircrafts, ammunitions, weapons, weapon systems and electronic components and similar equipment as a result of changes in physical, mechanical and chemical properties thereof due to environmental conditions they are under are defined as corrosion. Corrosion generally occurs in humid air, salty water, acidic or basic environment, alkaline environment and polluted air environment.-An oxidation area, a reduction area, a conductive solvent and a metallic transmission way should exist for corrosion occurrence.

Although there are several types of corrosion, the most commonly seen types are general corrosion and pitting corrosion. General corrosion mostly occurs onto materials and properties made from steel and cast iron at atmospheric conditions as a result of air or soil contact causing the entire deformation of the surface. Pitting corrosion occurs as a result of interactions between ions existing in the environment and injured areas at surface of material and properties caused by a damage and that are open to oxidation.

Pitting corrosion can usually be seen at sensitive areas caused by damage of protective layer applied on metallic materials and properties.

Damages directly and indirectly caused by corrosion are the most important indicators determining measures and actions required to be taken to protect against corrosion. In fact the primary purpose of fighting against corrosion is to achieve economic gain. Therefore, non-economic protection measures are not considered as usable solution ways.

Measures that can be taken to protect materials and properties against corrosion are divided into three groups, namely, electro-chemical methods, protective coatings and chemical methods.

Anodic and cathodic protection methods which are under electro-chemical methods are directly applied onto material and change structure of material by means of electro-chemical reactions. Surface features of the materials and properties protected by use of this method will change and production cost will increase considerably.

Protective coatings are achieved by means of painting, metallic coating, noble metal coating or active metal coating methods. As it provides cost advantage in comparison to other methods, use of protective paint is the most common technique for protective coating application and paints used are usually contains corrosion preventing pigments such as zinc phosphate. In this method; homogenous, solid and impermeable layer should be formed on surface of the material or property to be protected, in order to provide protection. An application comprising three steps is conducted for this purpose. In the first step, a coating layer is applied in order to provide sticking onto material or property to be protected. The second layer is applied to enhance strength and provide waterproof feature. The third and last layer provides water vapor resistance while providing mechanical strength against external factors. In the painting method for protective coating purpose, other properties such as aesthetic properties of end product or surface or properties of water prevention, oil prevention, fireproof, reflection completely change. For that reason, it is not likely to provide protection for surfaces with functional features by the painting method. Furthermore, in case of occurrence of any sensitive area as a result of any damage to the painting, risk of pitting corrosion on material or surface remains a fixed probability.

Chemical protection method, which is used in order to eliminate the disadvantage of protection methods provided by electro-chemical methods and coating with paint changing features of material or property intended to be protected, is adding preventive chemicals into medium in order to prevent wearing reaction between corrosion forming agents and material and property to be protected. Thus, structure of material or property to be protected can provide protection by making changes in medium or environmental conditions without any changes in surface properties or aesthetic properties. Preventive materials used for this purpose are generally referred to as inhibitors. Inhibitor use is the most effective and best benefit cost rate protection method against particularly pitting corrosion.

Inhibitors form a film such thin that not visible on metal content materials and properties intended to be protected and creates a barrier between structure to be protected and environmental factors and prevents reduction oxidization causing rusting. The most commonly used inhibitor group for that purpose is the group referred to as volatile corrosion inhibitors (VCI).

Other methods used for the purpose of creating a barrier between environmental conditions and material or property intended to be protected are use of humidity removing system and covering with a cover which is generally a vinyl basis canvas or floor cloth.

Humidity removing system use is based on principle of protection by removing humidity in the environment and it requires high investment and operating cost, requires a bulky system and it is inadequate when the relative humidity rate is above 50%. As this method requires controlled environment, particularly it does not allow mobile applications. In addition, it provides protection against general corrosion rather than pitting corrosion.

Protective covers and surface covers are used for protection of materials, equipment and parts against heavy environmental conditions. A sample for such area is vinyl base cover use method and it is frequently preferred due to cost advantage but protection mechanism is covered by an impermeable structure to provide insulation principle, so its effectiveness is limited. In case of leakage, protection disappears, and the risk of the greenhouse effect or condensing is high due to the impermeability of the protective structures used. In this case an effect called cataplasm effect occurs and due to internal condensation, material and property intended to be protected is exposed to humidity and thus general corrosion and pitting corrosion occurrence speed increases.

In the state of art, various studies concerning method of covering with VCI containing protective surface are seen. The studies can be grouped as VCI containing bag structures, combined structures involving VCI containing glues, VCI containing boxes and VCI containing multiple-layer structures. These structures can be used against both general corrosion and pitting corrosion.

VCI bag structures are generally film structures consisting of minimum one layer and examples for it are disclosed under patent applications numbered EP3384067 A and EP2347897 B1. Oil based VCI applied water basis film structure that is disclosed under Patent application numbered EP3384067 A, protects surfaces against rusting by means of covering metal materials or properties. In case of deformation of covering made onto metal surface in this application due to any mechanical or environmental cause, protection performance decreases and areas exposed regional corrosion occur. Patent document numbered EP2347897 B1 discloses a film embodiment comprising combination of more than one film layer with one consisting of VCI. This material is used as bag and material or property intended to be protected is wrapped by this bag. Since bag embodiments are not suitable for seaming, it is not likely to shape them to match material or property to be protected by this method and wrapping operation is made.

Samples of packaging materials comprising VCI glue can be seen in documents numbered EP2730696 B1, CN102975437 A and EP2611605 B1. Embodiment disclosed under document numbered EP2730696 B1 comprises VCI containing glues located between two textile surfaces. Embodiment disclosed under the document numbered CN102975437 A relates to gluing non-woven fabric surface to polymer layer by use of glue layer. The part described as glue layer contains VCI and can be used to - join the non-woven fabric surface to polymer layer by means of hot melt method. Document numbered EP2611605 B1 comprises two fabric layers, where one of them is a porous layer, one polymer layer and VCI content glue between them. The invention comprises water vapor permeable polymer layer, support fabric, VCI containing glue and inner layer fabric from outward to inward. VCI can only move towards surfaces intended to be protected by help of polymer layers provided in the embodiment and limiting connection with outer environment. Humidity transmission speed of polymeric matrix structure such as acrylic latex, urethane or epoxy used in the obtained embodiment is minimum 100 g/m²/day. When VCI molecules are embedded into polymeric matrix structure, it becomes difficult to release in the intensive structure and reach material or property intended to be protected.

An example for use of box containing VCI is disclosed under patent document numbered US20150075684 A. The document discloses a protective box produced by use of double layered material formed by means of combining PP film containing VCI and PP non-woven fabric surface. When the box is covered onto the material or property intended to be protected, film layer containing VCI will release towards material or property intended to be protected. As the box of this protection method has a significant empty volume, it is bulky and not allowing transporting. Another material that can be used in a similar box embodiment is disclosed under patent document numbered EP2917270 A. This material containing 10 - 100 kg/m³ density polystyrene or polystyrene and polyethylene mixture foam 0,5 - 8,0 % range VCI can be used in production of protective box.

Examples for multiple layer textile embodiment containing VCI can be documents numbered DE202019104133, WO2016127159 A1 and EP2435244 A2. In the utility model document numbered DE202019104133, LDPE film containing VCI of 10 % is fixed to PP non-woven surface. Thus, an embodiment that can provide resistance and protection against rusting is obtained. Patent document numbered WO2016127159 A1 relates to a two-layer embodiment. In the embodiment, non-woven surface and VCI containing polymer are joined and thus a layered surface having humidity transmission rate of 25-1000 g/m²/day is obtained.

In said multiple layer embodiments, when number of layer increases, joining becomes difficult and solid structure of the embodiment is negatively affected. When joining achieved by heating and number of layer increases, strength of application decreases and delamination risk occurs due transmission homogeneity of heat among layers. In case of such risk, negative effect on VCI layer or occurrence thereof and resulting in damage may negatively affect protection feature.

Patent application document numbered EP2435244 A2 discloses an embodiment comprising six layers in general. The embodiment consists of respectively from outward to inward an outer textile surface, a membrane structure of preferably e-PTFE, a carrying textile surface, a surface containing VCI, an absorbing textile surface and a second carrying textile surface. Protection from radar is provided by means of absorbing radar waves by use of radar protective textile surface instead of carrying textile surface. Layers selected to be in this multiple-layer embodiment are joined by seaming. VCI layer in the invention is described as weaving, knitting, non-woven or any surface. The document discloses a method for obtaining multiple-fabric embodiment by means of sewing in a fixed order that can provide radar and close infrared protection at the same time as well as corrosion. In multiple layer fabric embodiments of this way particularly in case of covering patterned surfaces for protection, when number of layers of fabric embodiment increases, textile surfaces gets thicker and thus rigid structure may occur. When number of layers between surface intended to be protected by VCI content layer or layer thickness increases, it will be difficult for VCI molecules to release and to reach surface intended to be protected, for that reason protection performance will be negatively affected. In addition, multiple layer materials joined by a joining method not homogenous such as joining by seams are mostly not good for patterning through cutting and thus not good for a confectionary as per a design.

In conclusion, several problems and negativities as described above are experienced in the related art and present applications are insufficient for settlement of the problems and negativities. This case makes it necessary to make a development and novelty in the related art.

### Brief Description of the Invention

The present invention relates to a protective textile embodiment meeting the needs mentioned above, eliminating all disadvantages and providing some additional advantages, and a manufacturing method for said protective textile embodiment.

The primary purpose of the invention is to provide a multiple layer protective textile embodiment comprising a textile surface produced by use of a yarn comprising VCI. The said embodiment comprises from inward to outward, a textile surface manufactured from yarn comprising volatile corrosion inhibitor, a sealing intermediate surface preventing reach of liquid molecules to that surface and an outer surface with function of protecting embodiment against external factors. Strength against environmental conditions, UV lights is achieved by use of said multiple layer textile embodiment. Also behaviour of fabric under its width, length or fabric plane perpendicularly affecting forces are developed. Thus, material or property intended to be protected is possible to be wrapped without need for displaying a special sensitivity and thus operation time is shortened. This provides a significant benefit in cases when materials or properties intended to be protected need to be wrapped at production facility exit or areas such as stock fields. Said strength also provides protection against environmental conditions and mechanical effects in long term stocking and does not require a special maintenance operation or storing condition.

In multiple layer textile embodiment of the invention the layer located the nearest to material or property intended to be protected is a textile surface manufactured from yarn containing volatile corrosion inhibitor and the surface not contacting the material or property intended to be protected is joined with a leakage proof surface. Thus, volatile corrosion inhibitor makes release directly towards material or property intended to be protected and protection life is long as there will be no inhibitor loss.

Since protective textile product of the invention is of nature allowing cutting, sewing thanks to joining by a homogenous joining method, it is of nature allowing garment able feature according to intended factors. Allowing wrapping operation this embodiment can also be used as a protective cover if required.

Textile surface manufactured from yarn containing volatile corrosion inhibitor is produced by means of weaving, knitting or non-woven surface production technology. Thus, differently from plain surfaces made by bag or membrane production technology, wavy surfaces are obtained. As a result thereof, surface area is obtained as a wider surface and area contacting outer environment increases significantly. Therefore, in comparison to applications containing bag or membrane embodiment in the related art, inhibitor release is made from a much wider area and protection performance increases significantly. Similarly, as there are more inhibitors in wider surface area, life of protective textile will be significantly long. In this form, it provides an advantage in comparison to products produced by non-homogenous joining method such as sewing in the related art.

In order to eliminate disadvantage of the related art, the invention develops a VCI content protective textile surface for wrapping material or property intended to be protected. VCI in the surface goes into gas form and creates a thin film on the material or property intended to be protected.

The structural and characteristics features and all advantages of the invention will be understood better with detailed descriptions and figures given below. Therefore, the assessment should also be made taking into account the detailed description.

### Brief Description of the Drawing

Figure 1 shows a general view of yarn forming textile surface provided in protective textile embodiment of the invention.
Figure 2 shows a general view of textile surface provided in protective textile embodiment of the invention.
Figure 3 is a general view of three-layer embodiment of protective textile structure of the invention.

### Reference Numbers

- K: Protective textile embodiment
- 1: Yarn
- 2: Matrix
- 3: Inhibitor
- 4: Textile surface
- 5: Sealing surface
- 6: Outer surface

### Detailed Description of the Invention

In this detailed description, the preferred embodiments of the protective textile embodiment (K) being subject of this invention have been disclosed solely for the purpose of better understanding of the subject and described in a manner not causing any restrictive effect.

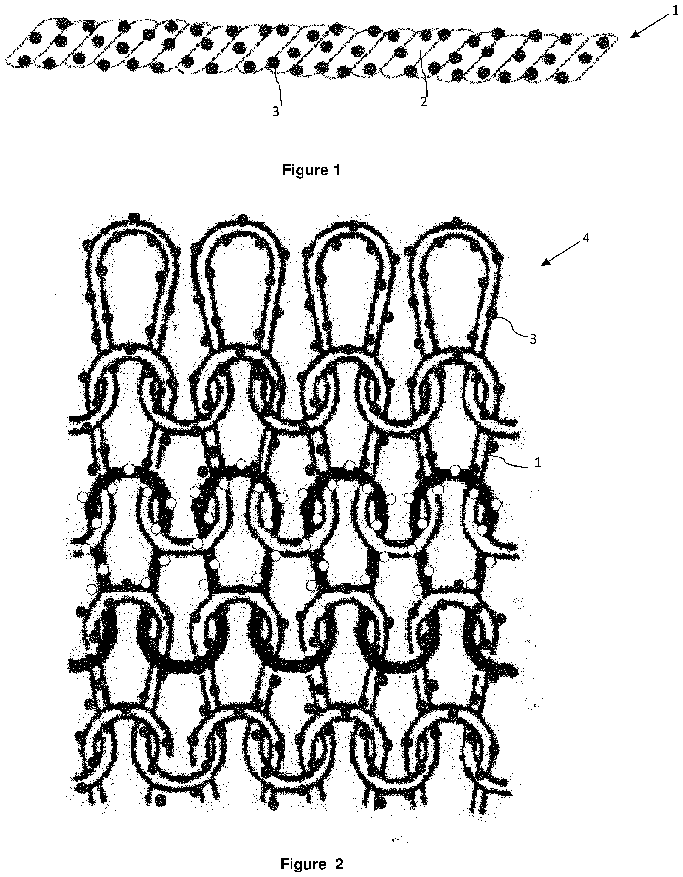

Invention relates to a protective textile embodiment (K) for use to prevent corrosion and deterioration of iron, steel and similar metal content materials by environmental conditions such as sea water, fresh water, humidity, dust, sand, extreme wind, UV lights, too low/high temperatures, immediate temperature changes etc. and a method for production of said protective textile embodiment (K). Protective textile embodiment (K) of the invention comprises yarn (1) of physical and mechanical features convenient for making textile surface (4) by use of one of weaving, knitting or non-woven surface production methods. Figure 1 shows a general view of yarn (1) forming textile surface (4) provided in protective textile embodiment (K) of the invention. According to it, said yarn (1) contains matrix (2) and volatile inhibitor (3). The said matrix (2) is the carrying material that forms the structure of yarn (1) and provides yarn (1) to be produced. Inhibitor (3) is a volatile chemical providing protection against corrosion and leaves yarn (1) structure, sticks onto material intended to be protected and prevents corrosive factors to access material intended to be protected. Thus, achievement of protection operation is provided by means of the said volatile inhibitor (3). The said matrix (2) used in yarn (1) production is polyolefin base material and preferably polyester, polyethylene, polypropylene, poly methyl ethylene, poly butane, poly methyl pentene and/or mixture of them are used.

Sodium nitrate, potassium nitrate, various benzoate groups or mixture of them are used as the inhibitor (3). Preferably sodium nitrate is used as volatile inhibitor (3) in the invention. The yarn (1) structure comprises volatile inhibitor (3) of 0,1 % to 5 % by weight. This rate is preferably in range of 1 % to 4 %.

The protective textile embodiment (K) of the invention comprises at least one textile surface (4). The said textile surface (4) is manufactured by use of the yarn (1) comprising the matrix (2) and volatile inhibitor (3) by preferring one of weaving, knitting or non-woven surface production techniques and is responsible for release of inhibitor (3) as protective layer provided inside the protective textile embodiment (K).. Figure 2 shows a general view of textile surface (4) provided in protective textile embodiment (K) of the invention.

The protective textile embodiment (K) of the invention comprises at least one sealing surface (5). The said sealing surface (5) provides movement of the volatile inhibitor (3) towards material intended to be protected. Thus, movement towards material intended to be protected rather than outer environment is possible. In addition, sealing surface (5) provides prevention of liquid flowing to material intended to be protected.

The protective textile embodiment (K) of the invention comprises at least one outer surface (6). The said outer surface (6) is used as the most out layer of the protective textile embodiment (K) and increases strength against environmental and mechanical effects.

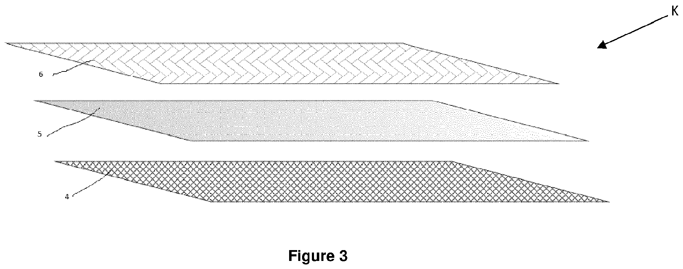

The textile surface (4) provided in the protective textile embodiment (K) of the invention is a structure in contact with material intended to be protected. Surface of the textile surface (4) not on side of material intended to be protected is in contact with sealing surface (5). The outer surface (6) is located in the most out part (in contact with sealing surface (5)). In this context, the protective textile embodiment (K) is a structure of at least three layers and comprises from material intended to be protected to outward, the textile surface (4), the sealing surface (5) and the outer surface (6). Figure 3 is a general view of three-layer embodiment of the protective textile structure of the invention.

The textile surface (4) provided in the protective textile embodiment (K) is a woven, knitted or non-woven textile product and shows feature of preventing occurrence of corrosion and provides protective performance against corrosion. The said textile surface (4) has a wider surface area in comparison to applications comprising bag or membrane structure and surface area is preferably at least 3 times bigger than bag and membrane embodiments. Preferably knitted textile surface (4) is used in the invention. Additionally, the textile surface (4) can be produced by weaving, knitting or randomly ordered fibres of yarn (1) by use of mechanical, chemical or thermal methods.

Sealing surface (5) provided as an intermediate layer in the protective textile embodiment (K) is a polymeric film structure and can be manufactured preferably from e-PTFE, polyurethane derivatives or mixtures thereof. In addition, the sealing surface (5) can be of mono-component or bi-component structure. Function of the sealing surface (5) is to increase protection performance by preventing access of liquid in outer environment to material intended to be protected.

Outer surface (6) provided in the protective textile embodiment (K) is a textile surface made from polyester base material or polyamide and function of it is to increase mechanical strength of the protective textile embodiment (K). The outer surface (6) can be woven, knitted or non-woven surface. Preferably woven outer surface (6) is used in the invention. Also, UV contribution materials can be used in the outer surface (6) production and thus material intended to be protected can be protected against UV lights and environmental conditions.

Yarn (1) structure of the protective textile embodiment (K) of the invention is provided with UV contribution of 1 % to 5 % by weight and the textile surface (4) is provided with UV strength feature. UV contribution rate is preferably in range of 1,5 % to 3,5 %.

Also pigment is added to the said yarn (1) structure and thus desired colour can be given to the textile surface (4).

Yarns (1) used in manufacture of the textile surface (4) can be manufactured by means of spinning the structure obtained by mixture of the matrix (2) and volatile inhibitor (3) by use of melt spinning and/or bicomponent fibre spinning method.

Weight of protective textile embodiment (K) is between 100 g/m² and 500 g/m² and preferably in range of 170 g/m² to 300 g/m².

Other than functional features, the protective textile embodiment (K) of the invention together with above described areas can be used as covers for vehicles, aircrafts, ammunitions, weapons, weapon systems and electronic components and similar equipment of civil and military applications. In addition, it can also be used for umbrella, canvas or tent like applications for purpose of protection from sun effects. In this context the protective textile embodiment (K) having said technical characteristics should not be considered as limited only to said areas.

In order to solve said technical problems and achieve all of the advantages to be better understand from detailed description given below, present invention is a protective textile embodiment (K) to prevent occurrence of corrosion, and comprises at least one textile surface (4) made from a yarn (1) that contains volatile inhibitor (3).

## Claims

1. A protective textile embodiment (K) to prevent occurrence of corrosion, and **characterized by** comprising; at least one textile surface (4) made from a yarn (1) comprising volatile inhibitor (3).

2. The protective textile embodiment (K) according to claim 1, **characterized by** comprising; as volatile inhibitor (3), sodium nitrate, potassium nitrate, various benzoate groups or mixture of them.

3. The protective textile embodiment (K) according to any one of above claims **characterized by** comprising; as volatile inhibitor (3), sodium nitrate.

4. The protective textile embodiment (K) according to any one of above claims **characterized by** comprising; yarn (1) contains volatile inhibitor (3) in the range of 0,1% to 5% by weight.

5. The protective textile embodiment (K) according to any one of above claims **characterized by** comprising; yarn (1) contains volatile inhibitor (3) in the range of 1 % to 4 % by weight.

6. The protective textile embodiment (K) according to any one of above claims wherein; said textile surface (4) being woven, knitted or non-woven surface.

7. The protective textile embodiment (K) according to any one of above claims **characterized by** comprising; textile surface (4) produced by weaving, knitting or randomly ordered fibres of yarn (1) by use of mechanical, chemical or thermal methods.

8. The protective textile embodiment (K) according to any one of above claims and **characterized by** comprising; said textile surface (4) consists at least one sealing surface (5) connected to surface not in contact with material intended to be protected against corrosion and leading movement of inhibitor (3) towards material intended to be protected.

9. The protective textile embodiment (K) according to any one of above claims wherein; said sealing surface (5) being in polymeric film structure.

10. The protective textile embodiment (K) according to any one of above claims **characterized by** comprising; said sealing surface (5) contains e-PTFE, polyurethane derivatives or mixtures thereof.

11. The protective textile embodiment (K) according to any one of above claims wherein; said sealing surface (5) being in mono-component or bi-component structure.

12. The protective textile embodiment (K) according to any one of above claims **characterized by** comprising; at least one outer surface (6) to increase strength against environmental and mechanical effects.

13. The protective textile embodiment (K) according to any one of above claims **characterized by** comprising; at least one outer surface (6) connected to surface of sealing surface (5) not in contact with textile surface (4) to increase strength against environmental and mechanical effects.

14. The protective textile embodiment (K) according to any one of above claims wherein; said sealing outer surface (6) being made from polyester base material or polyamide.

15. The protective textile embodiment (K) according to any one of above claims wherein; said outer surface (6) being woven, knitted or non-woven surface.

16. The protective textile embodiment (K) according to any one of above claims **characterized by** comprising; said yarn (1) contains volatile inhibitor (3) in range of 1 % to 5 % by weight to provide UV strength.

17. The protective textile embodiment (K) according to any one of above claims **characterized by** comprising; said yarn (1) contains volatile inhibitor (3) in range of 1,5 % to 3,5 % by weight to provide UV strength.

18. The protective textile embodiment (K) according to any one of above claims wherein; said protective textile embodiment (K) has a weight in range of 100 g/m² to 500 g/m².

19. The protective textile embodiment (K) according to any one of above claims wherein; said protective textile embodiment (K) has a weight in range of 170 g/m² to 300 g/m².

20. The protective textile embodiment (K) according to any one of above claims **characterized by** comprising; textile surface (4) manufactured by means of spinning the structure obtained by mixture of matrix (2) and volatile inhibitor (3) by use of fibre spinning from solution and/or bi-component fibre spinning method.
